Europäisches Patentamt

European Patent Office

Office européen des brevets

(11) Veröffentlichungsnummer: **0 406 032 A1**

## (12) EUROPÄISCHE PATENTANMELDUNG

(21) Anmeldenummer: **90400984.2**

(22) Anmeldetag: **10.04.90**

(51) Int. Cl.5: **C02F 3/30**

(30) Priorität: **29.05.89 DE 3917368**

(43) Veröffentlichungstag der Anmeldung:
**02.01.91 Patentblatt 91/01**

(84) Benannte Vertragsstaaten:
**AT BE CH DK ES FR GB IT LI LU NL SE**

(71) Anmelder: **DEGREMONT S.A.**
**183, Avenue du 18 Juin 1940**
**F-92508 Rueil-Malmaison Cédex(FR)**

(72) Erfinder: **Brautigam, Hans Jürgen M.**
**Marmstorfer Weg 74**
**D-2100 Hamburg 90(DE)**

(74) Vertreter: **Armengaud, Charles**
**Cabinet ARMENGAUD AINE 3, Avenue**
**Bugeaud**
**F-75116 Paris(FR)**

(54) Verfahren für die biologische Behandlung von aufgelösten Nitraten.

(57) Procédé pour la transformation biologique de nitrates dissous en azote (2), au moyen d'un agent réducteur gazeux, caractérisé en ce que comme carbone et source d'énergie pour le processus microbiologique, on utilise du gaz de pétrole liquéfié (8) transformé dans le réacteur (5) par de l'oxygène (9) en une forme appropriée pour la dénitrification dans le réacteur (2).

La présente invention a pour objet un procédé pour la transformation biologique de nitrate dissous en azote, au moyen d'un agent réducteur gazeux, et une installation pour la mise en oeuvre du procédé.

On connait l'élimination de nitrates indésirables dans l'eau, nuisibles pour la santé, à l'aide de microorganismes (dénitrification), par utilisation d'agents réducteurs gazeux. Jusqu'à présent, on a utilisé l'hydrogène et le méthane. Dans le cas du méthane, toutefois, la réalisation n'a été effectuée qu'à l'échelle du laboratoire.

Par rapport à la dénitrification avec des agents réducteurs liquides, comme par exemple le méthanol, l'éthanol, des déchets organiques, des boues résiduaires, etc., un gaz présente généralement l'avantage qu'une surdose et la pollution résiduaire qui y est liée ne sont pas à craindre. Un inconvénient de l'hydrogène est toutefois constitué par le coût élevé de fonctionnement et d'investissement nécessaire, car en raison de sa faible solubilité (par exemple 1,7 g $H_2$/litre à 10°C), l'opération de dénitrification doit être effectuée par exemple sous une pression de 5 bars.

Dans le cas du méthane, dont l'aptitude fondamentale a pu être démontrée par des essais de laboratoire (M. Werner, Denitrification unter besonderer Berücksichtigung externer Kohlenstoffquellen, Veröffentlichung des Zentrums für Abfallforschung des TU-Braunschweig, éditeur : Kayser, Albers, cahier n° 3, 1988), la solubilité est suffisante, mais la vitesse de dénitrification, faible et non économique, s'est avérée être un inconvénient. Selon les connaissances actuelles, l'étape restrictive de la réaction en deux étapes est la transformation du méthane en méthanol, à l'aide d'oxygène, dans la première étape. La mise en oeuvre de méthane s'est donc limitée jusqu'à présent à l'échelle du laboratoire.

L'objectif de l'invention est de développer un procédé et une installation du type mentionné en introduction, de telle façon, que pour une mise en oeuvre minimale d'énergie et d'investissement en équipement, la dénitrification de l'eau puisse être effectuée sans qu'il reste dans l'eau une pollution résiduelle.

Conformément à l'invention, cet objectif est atteint grâce aux caractéristiques de la revendication 1 pour le procédé et à celles de la revendication 11 pour l'installation.

Des modes de réalisation de l'invention sont décrits dans les revendications dépendantes. L'invention sera mieux comprise à l'aide de la description ci-après.

Comme agent réducteur, on utilise du gaz de pétrole liquéfié. Par gaz de pétrole liquéfié, il faut entendre ici, en s'appuyant sur la norme DIN 51622, des hydrocarbures en $C_3$ et/ou en $C_4$ de qualité technique, tels que le propane, le propène, le butane, le butène et leurs mélanges.

L'utilisation de ces agents réducteurs, gazeux à la pression atmosphérique, est particulièrement avantageuse du fait qu'ils sont extrêmement bon marché, que le problème de la pollution résiduelle est réduite au minimum et que la décomposition biologique nécessaire pour la dénitrification s'effectue à une vitesse élevée.

Pour la mise en oeuvre du procédé, la quantité totale de gaz de pétrole liquéfié nécessaire est dissoute dans l'eau à dénitrifier, soit à l'extérieur du réacteur de dénitrification, soit à l'intérieur même du réacteur. Au point de vue économique et au point de vue de la sécurité, il est préférable de mettre en contact l'eau avec le gaz de pétrole liquéfié à l'intérieur d'un réacteur fermé. A cet effet, le gaz est dispersé directement dans l'eau sous forme de petites bulles, afin d'atteindre une vitesse de dissolution élevée. Un procédé tout aussi avantageux pour la dissolution de l'agent réducteur est l'utilisation de membranes perméables aux gaz, constituées de caoutchouc silicone. Dans ce cas, il n'est pas nécessaire d'opérer dans un réacteur fermé, de sorte que par la réduction des dépenses pour la sécurité, on peut réaliser des économies. La quantité totale d'agent réducteur nécessaire peut être dissoute dans le courant d'eau principal aussi bien que dans un courant d'eau partiel, qui est ensuite réuni au courant d'eau principal.

Les recherches effectuées ont donné des taux de transformation maximales de 11,7 g de $NO_3$-N/kg de TS. Ce résultat est plus de cinq fois supérieur à celui obtenu avec le méthane. Dans le même temps, on a constaté que de l'oxygène est nécessaire et que la vitesse de dénitrification est d'autant plus élevée, que la quantité d'oxygène introduite par unité de temps dans le réacteur de dénitrificaton est élevée. Manifestement, le gaz de pétrole liquéfié dissous, qui ne peut être utilisé tel quel par les microorganismes dénitrificateurs, doit être d'abord transformé par d'autres microorganismes, par une consommation d'oxygène, en produit du métabolisme utilisable. Les dénitrifiants qui, dans ce cas, sont associés aux microorganismes oxydant le gas de pétrole liquéfié, ont besoin des produits du métabolisme libérés dans la phase aqueuse comme source de carbone, pour la transformation du nitrate en azote.

Compte tenu de ces processus microbiologiques, un autre mode de réalisation du procédé consiste en ce que la transformation du gas de pétrole liquéfié, en une forme utilisable pour la dénitrification, s'effectue dans un réacteur séparé, avec amenée d'oxygène, à l'aide de microorganismes en suspension ou immobilisés, qui se sont développés d'eux-mêmes après un certain temps.

La phase aqueuse, dans laquelle les produits de décomposition du gaz de pétrole liquide, appropriés pour la dénitrification, se sont accumulés, est amenée ensuite dans le réacteur de dénitrification, en quantités ajustées aux besoins. Cette séparation impliquée par le procédé élève la rentabilité grâce aux vitesses de réaction globalement plus élevées, car chacune des deux étapes de réaction peut être rendue optimale indépendamment de l'autre. Cette nouvelle solution pour la dénitrification peut être également avantageusement mise en oeuvre dans les procédés de dénitrification connus avec du méthane.

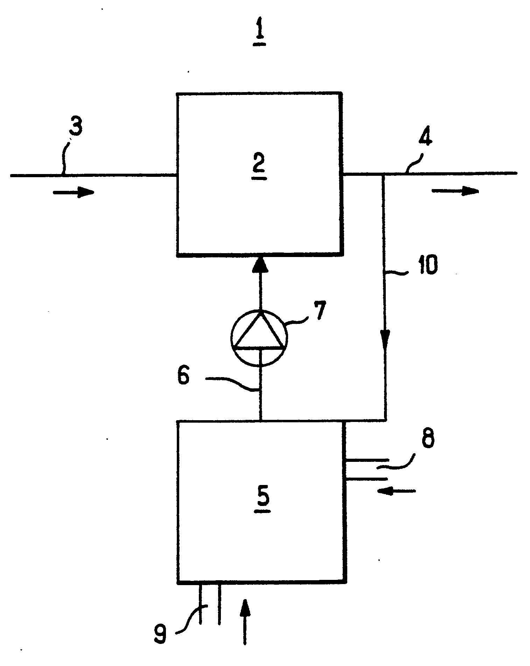

La figure représente un schéma-bloc d'une installation 1 de dénitrification de ce type. Un réacteur de dénitrification 2 reçoit de l'eau contenant des nitrates par l'intermédiaire d'un conduit d'alimentation 3. L'évacuation de l'eau purifiée s'effectue par le conduit d'évacuation 4. Parallèlement au réacteur de dénitrification 2, par l'intermédiaire d'un conduit 6 et de la pompe 7. Le réacteur 2 est alimenté en gaz de pétrole liquéfié tel que par exemple du méthane, par l'intermédiaire d'un conduit 8, et en oxygène pur ou en air, par l'intermédiaire d'un conduit 9. Dans le réacteur 5, s'effectue la transformation du gaz de pétrole liquide en une forme appropriée pour la dénitrification dans le réacteur de dénitrification 2. Ces produits de décomposition du gaz de pétrole liquéfié sont ensuite dissous dans l'eau et amenés dans le réacteur de dénitrification 2, par l'intermédiaire du conduit 6. Pour obtenir le niveau d'eau voulu dans le réacteur 5, celui-ci est relié, par l'intermédiaire d'un conduit 10, au conduit d'évacuation 4, à partir duquel l'eau purifiée sortant du réacteur de dénitrification 2 passe dans le réacteur 5.

Les procédés décrits sont adaptés en particulier pour la dénitrification d'eaux usées, d'eaux de procédé de l'industrie des boissons, de l'aquaculture, etc., purifiées par des moyens mécaniques-biologiques, ainsi que pour la dénitrification des eaux souterraines devant être utilisées comme eau potable.

L'utilisation de gaz de pétrole liquéfié permet ici une transformation plus efficace et plus économique des nitrates en azote, dans laquelle les incidents, en particulier les problèmes de pollution résiduelle, sont réduits au minimum.

## Revendications

1. Procédé pour la transformation biologique de nitrates dissous en azote, au moyen d'un agent réducteur gazeux, caractérisé en ce que comme carbone et source d'énergie pour le processus microbiologique, on utilise du gaz de pétrole liquéfié.

2. Procédé selon la revendication 1, caractérisé en ce que l'on utilise un gaz de pétrole liquéfié contenant des composés hydrocarbonés en $C_3$ et/ou en $C_4$.

3. Procédé selon les revendications 1 et 2, caractérisé en ce que pour le processus microbiologique, on amène simultanément du gaz de pétrole liquéfié et de l'oxygène à l'endroit où se déroule le processus.

4. Procédé selon l'une quelconque des revendications 1 à 3, caractérisé en ce que le gaz de pétrole liquéfié est dissous dans un courant partiel d'eau.

5. Procédé selon l'une quelconque des revendications 1 à 4, caractérisé en ce que le gaz de pétrole liquéfié est dissous dans l'eau par l'intermédiaire de membranes de silicone.

6. Procédé selon l'une quelconque des revendications 1 à 4, caractérisé en ce que pour dissoudre le gas de pétrole liquéfié dans l'eau, on le disperse directement dans ce milieu sous forme de bulles fines.

7. Procédé selon la revendication 1, caractérisé en ce que comme gaz de pétrole liquéfié, on utilise du méthane.

8. Procédé selon l'une quelconque des revendications 1 à 7, caractérisé en ce que la dénitrification s'effectue à l'aide de microorganismes en suspension dans une cuve munie d'agitation.

9. Procédé selon l'une quelconque des revendications 1 à 7, caractérisé en ce que la dénitrification s'effectue à l'aide de microorganismes cultivés sur un matériau de support.

10. Procédé selon l'une quelconque des revendications 1 à 9, caractérisé en ce que dans un premier réacteur, du gaz de pétrole liquéfié dissous est soumis à une oxydation biologique par des microorganismes, tandis que de l'oxygène est alimenté dans la cuve, puis cette phase aqueuse est transférée dans un autre réacteur, dans lequel la dénitrification de l'eau s'effectue par des microorganismes en suspension ou immobilisés.

11. Installation pour la mise en oeuvre du procédé selon la revendication 10, caractérisée en ce qu'elle comprend un réacteur de dénitrification (2), avec un conduit d'amenée (3) pour l'eau contenant les nitrates, et un conduit d'évacuation (4) pour l'eau purifiée, qui est relié, par l'intermédiaire d'un conduit (6), à un autre réacteur (5) pouvant être alimenté en gaz de pétrole liquéfié par l'intermédiaire d'un conduit (8) et en oxygène par l'intermédiaire d'un conduit (9).

12. Installation selon la revendication 11, caractérisée en ce que le réacteur (5) est relié au conduit d'évacuation (4) par l'intermédiaire d'un conduit (10).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 261 516 (GELSENWASSER AB) * Page 4, revendications 1,3,4; page 4, lignes 1-46 * --- | 1,3,6,8 | C 02 F 3/30 |
| A | FR-A-2 276 268 (IDEMITSU KOSAN CO.) * Page 7, revendications 1,3,4; page 2, lignes 9-23 * --- | 1 | |
| A | US-A-3 502 566 (GREAT CANADIAN OIL SANDS) * Colonne 2, ligne 32 - colonne 3, ligne 29; colonne 5, lignes 22-64 * --- | 1 | |
| A | WO-A-8 700 517 (H.J. BRÄUTIGAM et al.) * Page 4, dernier alinéa - page 5, ligne 24; page 9, alinéa 2 * ----- | 1,5,7,9 | |

DOMAINES TECHNIQUES RECHERCHES (Int. Cl.5)

C 02 F

Le présent rapport a été établi pour toutes les revendications

| Lieu de la recherche | Date d'achèvement de la recherche | Examinateur |
|---|---|---|
| LA HAYE | 22-08-1990 | TEPLY J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)